# EUROPÄISCHE PATENTSCHRIFT

(11) **EP 1 185 442 B1**
(45) Veröffentlichungstag und Bekanntmachung des Hinweises auf die Patenterteilung: **09.07.2003**
(21) Anmeldenummer: 99931166.5
(22) Anmeldetag: 24.06.1999
(51) Int. Cl.: B60R 21/32

(54) **VORRICHTUNG UND VERFAHREN ZUR SITZÜBERWACHUNG MITTELS EINER OPTOELEKTRONISCHEN TRIANGULATIONSTECHNIK**
DEVICE AND METHOD FOR MONITORING SEATS BY MEANS OF AN OPTOELECTRONIC TRIANGULATION TECHNIQUE
DISPOSITIF ET PROCEDE DE SURVEILLANCE DE SIEGE A L'AIDE D'UNE TECHNIQUE DE TRIANGULATION OPTOELECTRONIQUE

(43) Veröffentlichungstag der Anmeldung: 13.03.2002
(73) Patentinhaber: FRAUNHOFER-GESELLSCHAFT ZUR FÖRDERUNG DER ANGEWANDTEN FORSCHUNG E.V., 80636 München (DE)
(72) Erfinder: HILLEBRAND, Matthias, D-47259 Duisburg (DE); HOSTICKA, Bedrich, D-47058 Duisburg (DE); SANTOS CONDE, José, D-47226 Duisburg (DE); STEVANOVIC, Nenad, D-44791 Bochum (DE); TEUNER, Andreas, D-45144 Essen (DE)
(74) Vertreter: Schoppe, Fritz, Dipl.-Ing.
(86) Internationale Anmeldenummer: EP9904388
(87) Internationale Veröffentlichungsnummer: WO01000459

(56) Entgegenhaltungen:
- EP-A- 0 309 927
- DE-A- 19 757 595
- US-A- 5 737 083
- YADID-PECHT O ET AL: "CMOS ACTIVE PIXEL SENSOR STAR TRACKER WITH REGIONAL ELECTRONIC SHUTTER" IEEE JOURNAL OF SOLID-STATE CIRCUITS,US,IEEE INC. NEW YORK, Bd. 32, Nr. 2, 1. Februar 1997 (1997-02-01), Seiten 285-288, XP000722219 ISSN: 0018-9200

## Beschreibung

Die vorliegende Erfindung bezieht sich auf eine Vorrichtung und ein Verfahren zur Sitzüberwachung in Kraftfahrzeugen und insbesondere eine Vorrichtung und ein Verfahren zur optischen Sitzüberwachung, die sich für die Steuerung des Aktivierungszustands eines oder mehrerer Airbags eignen.

Ein zentral angeordneter Airbag soll im Fall eines Unfalls auslösen, wenn sich eine Person in aufrechter Haltung auf dem Sitz befindet. Beugt sich eine Person zu dicht vor den Airbag oder befindet sich ein Kindersitz oder ein anderes Objekt auf dem Sitz, so daß eine Person bzw. ein Kind zu Schaden kommen kann, bzw. der Airbag unnötigerweise ausgelöst wird, muß dieser Zustand von einem Sitzüberwachungssystem erkannt werden, so daß die Airbagauslösung verhindert bzw. die Entfaltungsdynamik des Airbags angepaßt werden kann.

Die Vorteile eines Airbags überwiegen potentielle Nachteile desselben bei weitem. Jedoch kann ein Airbag seine Schutzwirkung nur dann optimal bereitstellen, wenn der Fahrzeuginsasse angegurtet ist, so daß der Airbag als eine ergänzende Einheit des sogenannten Rückhaltesystems, SRS (SRS = Supplemental Restrain System) zu betrachten ist. Der Airbag unterstützt die Rückhaltewirkung des Gurtes bei einer frontalen Kollision und vermeidet den direkten Anprallkontakt des Thoraxes, Halses und Kopfes am Armaturenbrett.

Ein Airbag zündet in der Regel 10 bis 40 ms nach Kollisionsbeginn, wenn die kollisionsbedingte Geschwindigkeitsänderung einen vorbestimmten Betrag überschreitet, der 25 km/h in Europa und 15 km/h in den USA beträgt. Dabei tritt die Airbaghülle mit einer Geschwindigkeit von 250 bis 300 km/h aus der Airbag-Abdeckung, wobei die Aufblaszeit 25 bis 40 ms beträgt und somit schneller ist als die Augenlidreaktion. Erst nach dieser Aufblaszeit ist die volle Schutzwirkung des Airbags gewährleistet. Befindet sich nun ein Insasse am Beginn eines Unfalls außerhalb der normalen Sitzposition, was auch mit OOP (OOP = Out of Position) bezeichnet wird, oder befindet sich ein Kindersitz auf dem Beifahrersitz, so können bedingt durch die hohen Austrittsbeschleunigungen während der Entfaltungsphase des Airbags, die im Bereich von 100 G liegen können, erhebliche Verletzungen verursacht werden, unabhängig davon, ob der Airbag bei einer geringen Geschwindigkeitsänderung oder einer hohen Geschwindigkeitsänderung gezündet wird. Somit ist es möglich, daß die Folgen eines im Grunde tragbaren Unfalls verschlimmert werden. Der Airbag kann seine vollständige Wirkung lediglich dann entfalten, wenn der Insasse einen ausreichenden Abstand von der Airbag-Abdeckung einnimmt. Bei der normalen Sitzposition beträgt der Abstand von der Brust des Fahrers zur Lenkradnabe in der Regel etwa 30 cm, während der Abstand von der Brust des Beifahrers zur Airbag-Abdeckung in der Regel etwa 50 cm beträgt, wobei die normalen Sitzpositionen je nach Innenraumgestaltung eines Fahrzeugs variieren.

Auf dem einschlägigen Technikgebiet sind nunmehr eine Mehrzahl von Verfahren zur Sitzüberwachung in Kraftfahrzeugen bekannt, um auf der Grundlage der Sitzüberwachung eine Airbag-Aktivierungszustand-Steuerung durchzuführen.

Zunächst ist es möglich, den Airbag manuell zu deaktivieren bzw. zu aktivieren, um eine potentielle Gefährdung durch den Airbag in einigen speziellen Fällen zu vermeiden. Dieser Ansatz führt jedoch leicht dazu, daß die Aktivierung des Airbags versehentlich vergessen wird. Die Messung des Auflagegewichts auf einem Kraftfahrzeugsitz mittels einer Drucksensorik ist ein häufig verwendetes Verfahren zur Sitzbelegungserkennung, wobei auf der Grundlage des gemessenen Gewichts die Aktivierung/Deaktivierung des Airbags durchgeführt wird. Bei diesem Verfahren werden jedoch Kindersitze, die unter dem verwendeten Gewichts-Schwellenwert liegen, nicht erkannt. Ferner ist es möglich, daß der Airbag unnötigerweise aktiviert wird, wenn sich Ladung auf dem Beifahrersitz befindet.

Darüberhinaus ist es möglich, zur Sitzbelegungserkennung eine kapazitive Messung des Objekts, das in der Regel ein Dielektrikum darstellt, das sich zwischen Sitzfläche und Instrumententafel befindet, durchzuführen. Hierzu sind Elektroden im Sitz und in der Instrumententafel angebracht. Mit Hilfe der Permittivitätsmessung gelingt es, den Belegungszustand eines Sitzes zu erkennen, wobei eine fehlerfreie Unterscheidung zwischen Mensch und Objekt in der Regel nicht gelingen wird.

Darüberhinaus ist es bekannt, mit Hilfe von Laufzeitmeßverfahren unter Verwendung aktiver Signalquellen, beispielsweise von Radarsignalquellen oder Laserlichtquellen, Sitzoberflächen zu vermessen, um ein "Reliefbild" für die Belegungsauswertung zu gewinnen.

Zur Kindersitzerkennung sind ferner Verfahren bekannt, die auf der Verwendung spezieller Kindersitze beruhen, die mit Transpondertechnik ausgestattet sind. Diese Transponder in den Kindersitzen deaktivieren den Airbag. Diese auf der Transpondertechnik basierenden Verfahren ermöglichen jedoch weder die Erkennung von fremden Kindersitzen noch die Erkennung von Fahrzeuginsassen.

Aus dem Artikel "Future Applications of Microsystem Technologies in Automotive Safety Systems von P. Steiner und S. Schwehr, in Ricken/Gessner: Advanced Microsystems for Automotive Applications 1998, Springer Verlag Berlin, 1998, ist eine Passagierzustandserkennung bekannt, bei der eine eine Person gefährdende Zone unmittelbar vor einem Airbag definiert wird, wobei diese Zone mittels aktiver monochromatischer Lichtquellen (LEDs) und herkömmlicher CCD-Bildsensoren punktuell überwacht wird. Wenn ein Insasse des Kraftfahrzeugs seine normale Position, in der er einen typischen Abstand von einem Airbagmodul innehat, verläßt, und somit möglicherweise zu nahe an den Airbag gelangt, deaktiviert das dort beschriebene System den Airbag oder reduziert die Auslösungsleistung für den Airbag. Gemäß dieser Druckschrift folgt die Auswertung der Belegungserkennung auf dem Triangulationsprinzip, bei dem der Standort eines Objekts durch Projektionsgeometrie aus der Position eines Lichtflecks in der Bildebene einer Kamera gewonnen werden kann. Das Triangulationsprinzip ist in der Technik bekannt.

Ein weiteres alternatives Verfahren zur selektiven Steuerung der Airbag-Aktivierung und -Deaktivierung besteht darin, eine eine Person gefährdende Zone unmittelbar vor dem Airbag zu definieren und diese Zone mit Hilfe eines Lichtvorhangs bzw. einer Lichtschranke zu überwachen. Wird der Lichtvorhang bzw. die Lichtschranke durchbrochen, was anzeigt, daß sich eine Person in der gefährdeten Zone befindet, wird der Airbag deaktiviert.

Aus der US-A-5737083 ist ein optischer Positionssensor zum Erfassen eines dreidimensionalen Profils, wie er zur Sitzüberwachung in Kraftfahrzeugen verwendet werden kann. Ein optisches Triangulationsverfahren wird verwendet, um den Bereich und näherungsweise das Profil eines Objektes zu bestimmen. Dazu ist ein Diodenarray vorgesehen, wobei jede Diode des Arrays einzeln sequentiell eingeschaltet wird, um einen Satz von Zeit-multiplexten optischen Strahlen zu erzeugen. Ferner ist ein Photodioden-Array vorgesehen, um aus den optischen Strahlen Stromwerte zu generieren, aus denen schließlich ein näherungsweises Maß für das dreidimensionale Profil und die Position des Objekts gewonnen wird.

Das Hauptproblem der oben genannten optischen verfahren zur Sitzüberwachung unter Verwendung aktiver Lichtquellen ist bedingt durch die extremen Beleuchtungsunterschiede, die in einem Kraftfahrzeug auftreten können. Dabei kann die Beleuchtung zwischen 1 mlx in dunkler Nacht bis 100 klx bei direkter Sonneneinstrahlung variieren. Insbesondere bei gleichzeitiger direkter Sonneneinstrahlung können die von aktiven monochromatischen Quellen in einen zu überwachenden Raum abgegebenen Lichtstrahlen nicht mehr aufgelöst werden. Aufgrund der gesetzlichen, länderspezifischen Sicherheitsvorschriften zur Einhaltung der Strahlungssicherheit von Laserstrahlen darf überdies nur eine geringe Lichtenergie von der monochromatischen Lichtquelle emittiert werden.

Die Aufgabe der vorliegenden Erfindung besteht darin, eine Vorrichtung und ein Verfahren zur Sitzüberwachung in Kraftfahrzeugen zu schaffen, die eine schnelle Erkennung der Sitzbelegung zur Aktivierung bzw. Deaktivierung eines Airbags bei beliebigen Beleuchtungsverhältnisses ermöglichen

Diese Aufgabe wird durch eine Vorrichtung nach Anspruch 1 und ein Verfahren nach Anspruch 7 gelöst.

Die vorliegende Erfindung schafft eine Vorrichtung zur Sitzüberwachung in Kraftfahrzeugen, die eine gepulst betriebene monochromatische Lichtquelle zum kurzzeitigen Belichten eines zu überwachenden Raums aufweist. Ferner ist ein Bildsensorarray zum Aufnehmen eines Bilds des zu überwachenden Raums vorgesehen, das eine globale elektronische Verschlußeinrichtung aufweist, die eine Einstellung der Belichtungszeit des Bildsensorarrays unabhängig von einem Auslesetakt des Bildsensorarrays ermöglicht. Ferner ist eine Synchronisationseinrichtung zum Synchronisieren des Betriebs der gepulst betriebenen Laserquelle und des Bildsensorarrays vorgesehen. Schließlich weist die erfindungsgemäße Vorrichtung eine Steuereinrichtung zum Steuern der Lichtquelle und des Bildsensorarrays auf, um während einer Belichtung des zu überwachenden Raums zu einer ersten Zeit ein erstes Bild desselben zu erzeugen, und um ohne eine Belichtung des zu überwachenden Raums zu einer zweiten Zeit ein zweites Bild desselben zu erzeugen. Schließlich ist eine Einrichtung vorgesehen, um aus dem ersten und dem zweiten Bild ein Differenzsignal zu erzeugen.

Die erfindungsgemäße Vorrichtung eignet sich zum einen zur Anwendung des optischen Lichtschnittprinzips, um die Kontur eines Objekts auf einem zu überwachenden Sitz zu bestimmen und somit das sich auf dem Sitz befindliche Objekt zu erkennen. Zum anderen eignet sich die erfindungsgemäße Vorrichtung zur Bestimmung des Abstands einer Person bzw. eines Objekts zu einem Airbag selbst, so daß bei plötzlicher Bewegung einer Person zum Airbag hin dieser bei einem zu geringen Abstand deaktiviert werden kann. Dabei ist es bevorzugt, eine Mehrzonen-Untersuchung zu verwenden, die eine Leistungs-angepaßte Airbag-Auslösung erlaubt.

Das Bildsensorarray der erfindungsgemäßen Vorrichtung zur Sitzüberwachung ist vorzugsweise ein CMOS/CCD-Bildsensor mit globaler Shutterfunktion, der zusammen mit einer monochromatischen Beleuchtungsquelle an einer geeigneten Stelle im Kraftfahrzeug, beispielsweise im Dachhimmel, an der Instrumententafel oder im Windlauf, befestigt ist. Globale Shutterfunktion bedeutet, daß eine Verschlußeinrichtung vorgesehen ist, die den gleichzeitigen elektronischen Verschluß aller Sensorelemente des Sensorarrays ermöglicht.

Erfindungsgemäß werden zur Auswertung einer Szene Differenzbildsignale herangezogen, die einer Bildaufnahme mit sehr kurzzeitig gepulster aktiver Beleuchtung und einer Bildaufnahme ohne gepulste Beleuchtung entstammen. Das gepulste und das ungepulste Bild, d.h. das Bild ohne Belichtung durch die Lichtquelle, werden mit minimalem zeitlichen Abstand konsekutiv aufgenommen. Somit arbeitet die erfindungsgemäße Vorrichtung auch unter extremen Umweltsituationen extrem störunanfällig. Vorzugsweise kann ferner ein Interferenzfilter vor dem Bildsensorarray verwendet werden, welches auf die Wellenlänge des von der monochromatischen Beleuchtungsquelle emittierten Lichtstrahls abgestimmt ist, so daß zusätzlich ein erheblicher Anteil des Störlichts unterdrückt werden kann.

Die in dem erfindungsgemäß erzeugten Differenzbild auslösbaren Intensitätsunterschiede können nachfolgend unter Anwendung konventioneller Analyseverfahren der digitalen Bildverarbeitung und Mustererkennung ausgewertet werden, wobei zu diesem Zweck insbesondere auf Erfahrungen zurückgegriffen werden kann, die im Bereich der industriellen Vermessungstechnik mit Lichtschnittsystemen bei definierten Beleuchtungsverhältnissen erworben wurden. Hierbei werden vorzugsweise Triangulationsverfahren verwendet, um den Abstand eines Insassen, wenn ein solcher erkannt wurde, von dem Airbag zu bestimmen, um dann auf der Grundlage der Abstandsbestimmung den Aktivierungszustand des Airbags zu steuern.

Die vorliegende Erfindung schafft ferner ein Verfahren zur Sitzüberwachung in Kraftfahrzeugen, bei dem zunächst ein zu überwachender Raum mittels einer gepulst betriebenen monochromatischen Lichtquelle unter Verwendung einer Belichtungszeit im Mikro- oder Nano-Sekundenbereich belichtet wird. Während dieser Belichtung wird ein erstes Bild des zu überwachenden Raums mittels eines Bildsensorarrays aufgenommen. Ein zweites Bild des zu überwachenden Raums ohne eine Belichtung desselben durch die Lichtquelle wird maximal 10 ms vor oder nach der Aufnahme des ersten Bilds aufgenommen. Aus dem ersten und dem zweiten Bild wird dann ein Differenzbild erzeugt.

Die vorliegende Erfindung basiert auf der Erkenntnis, daß zur störungsunanfälligen Sitzüberwachung in Kraftfahrzeugen Vorrichtungen und Verfahren verwendet werden können, die ein Differenzbild aus einem ersten Bild, das während einer Belichtung aufgenommen wird, und einem zweiten Bild, das bei fehlender Belichtung aufgenommen wird, erzeugen. Für die Erzeugung eines solchen zur Signalauswertung geeigneten, störunanfälligen Differenzbildsignals müssen einige Voraussetzungen erfüllt sein. Zunächst müssen zur Belichtung kurzzeitige Lichtpulse im Mikro- oder Nano-Sekundenbereich verwendet werden, damit eine möglichst hohe Lichtleistung bei minimaler Lichtenergie abgegeben werden kann. Ferner müssen minimale zeitliche Intervalle zwischen den gepulst aufgenommenen und ungepulst aufgenommenen Bildern verwendet werden, um durch eine Objektbewegung hervorgerufene Störungen zu minimieren. Ferner ist eine global synchronisierte Belichtung des Bildsensors unerläßlich, um Bewegungsunschärfen und hieraus resultierende Verfälschungen im Differenzbildsignal zu minimieren.

Die obigen Voraussetzungen können bei der erfindungsgemäßen Vorrichtung durch die Verwendung eines Bildsensorarrays mit einer globalen elektronischen Verschlußeinrichtung und einer Synchronisationseinrichtung zum Synchronisieren des Betriebs der gepulst betriebenen Lichtquelle und des Bildsensorarrays realisiert werden.

Bei bekannten Systemen auf dem Gebiet der optischen Überwachungstechnik werden Bildaufnahmeverfahren unter Verwendung einer kontinuierlichen aktiven, strukturierten Beleuchtung durchgeführt. Dadurch wird die Möglichkeit geschaffen, definierte Beleuchtungsverhältnisse zu realisieren, die erst eine robuste Bildauswertung erlauben. Dieser Ansatz wird in verschiedensten Bereichen der industriellen Bildverarbeitung zur Form-Prüfung und -Erfassung verfolgt. Im Gegensatz dazu werden erfindungsgemäß gepulst betriebene Lichtquellen mit sehr kurzen Belichtungszeiten in Kombination mit einem Bildsensorarray, das entsprechend kurze globale Belichtungszeiten ermöglicht und das mit der aktiven Belichtungsquelle synchronisiert ist, verwendet. Erst hierdurch wird die Möglichkeit geschaffen, auch unter extremen Beleuchtungsbedingungen das von der Lichtquelle emittierte strukturierte Licht mit einer Energie abzustrahlen, die auch bei Sonnenlichteinwirkung die Detektion des von einem Objekt reflektierten Licht erlaubt, ohne daß gesundheitliche Beeinträchtigungen bei direkter Augenbestrahlung durch Laserquellen oder fokussierte LEDs auftreten können. Somit stellt die Kombination aus gepulst betriebenen Lichtquellen mit strukturierter Beleuchtung und dem Einsatz eines Bildsensorarrays, vorzugsweise eines CMOS/CCD-Bildsensors, mit globaler Verschlußeinrichtung und einstellbaren Integrationszeiten im Mikro- und Nano-Sekundenbereich ein besonders vorteilhaftes System zur Sitzüberwachung dar, das beispielsweise geeignet für eine Steuerung eines Airbag-Aktivierungszustands verwendet werden kann.

Die vorliegende Erfindung ermöglicht somit durch die Erzeugung eines Differenzbildes die Eliminierung von Fremdlichteinflüssen aufgrund direkter Sonneneinwirkung, Schatten, Gegenlicht, Laternenlicht und dergleichen, wobei nur der nicht-sichtbare, schmalbandige Nahinfrarotanteil der Lichtquelle durch die Differenzbildbildung eine Beitrag zum auszuwertenden Signal liefert.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:
- Fig. 1: eine schematische Darstellung einer erfindungsgemäßen Vorrichtung zur Sitzüberwachung;
- Fig. 2: ein schematisches Schaltungsdiagramm eines Bildsensorelements eines Bildsensorarrays der erfindungsgemäßen Vorrichtung zur Sitzüberwachung;
- Fig. 3: eine schematische Darstellung der erfindungsgemäßen Vorrichtung zur Sitzüberwachung bei Verwendung derselben in einer Hochgeschwindigkeitskamera; und
- Fig. 4a) bis c): schematische Darstellungen zum Veranschaulichen des Prinzips der optischen Sitzüberwachung zur Airbagsteuerung.

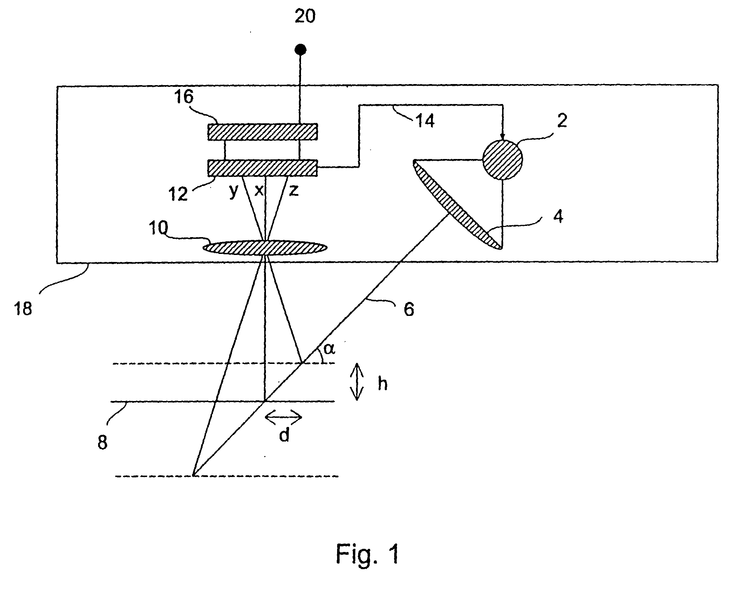

In Fig. 1 ist schematisch eine erfindungsgemäße Vorrichtung zur Sitzüberwachung dargestellt, wobei eine Lichtquelle mit dem Bezugszeichen 2 bezeichnet ist. Die Lichtquelle 2 ist vorzugsweise eine Laserdiode oder LED, die vorzugsweise im nicht-sichtbaren Nahinfrarotbereich, 700 nm bis 1100 nm, Licht emittiert. Vor der Lichtquelle 2 ist bei dem dargestellten Ausführungsbeispiel eine Optikeinrichtung 4 zur Formung eines Lichtfächers angeordnet. Die Einrichtung 4 ist vorzugsweise eine Zylinderoptik oder ein Beugungsgitter.

Der von der Lichtquelle 2 und der optional angeordneten Optik 4 ausgesandte Lichtstrahl 6 trifft auf ein Objekt, das als durchgezogene Linie schematisch bei 8 dargestellt ist, und wird durch eine Empfangsoptik 10 auf ein Bildsensorarray 12 geworfen. Das Bildsensorarray 12 ist vorzugsweise ein CMOS/CCD-Bildsensor, der eine Auflösung von mindestens 128 x 128 Pixeln aufweist und eine global einstellbare synchrone Belichtungszeit besitzt, die unabhängig vom Auslösetakt der Pixelwerte gesteuert werden kann. Hierdurch wird die Möglichkeit geschaffen, auch im Mikro- und Nano-Sekundenbereich zu belichten. Um diese kurze Belichtungszeit zu realisieren, wird die Lichtquelle 2 mit sehr kurzen Pulsen einer geeigneten Länge betrieben, wobei die Lichtquelle 2 und das Bildsensorarray 12 synchronisiert betrieben werden, wie durch eine Leitung 14 schematisch angezeigt ist. Dazu ist eine Ansteuerelektronik 16 für den CMOS/CCD-Bildsensor und die Beleuchtungsquelle zur synchronisierbaren Beleuchtung vorgesehen. Die Ansteuerelektronik kann entweder als FPGA (Field Programmable Gate Array = feldprogrammierbares Gatterartay) oder als ASIC (Application Specific Integrated Circuit = anwendungsspezifische integrierte Schaltung) realisiert sein, oder alternativ zusammen mit dem Bildsensorarray auf einer integrierten Schaltung integriert werden.

Die Ansteuerelektronik 16 ermöglicht zusammen mit dem Bildsensorarray, das eine globale elektronische Verschlußeinrichtung aufweist, die eine Einstellung der Belichtungszeit des Bildsensorarrays unabhängig von einem Auslesetakt des Bildsensorarrays ermöglicht, daß eine Bildaufnahme mit Belichtung und eine Bildaufnahme ohne Belichtung mit einem zeitlichen Abstand von weniger als 10 ms aufgenommen wenden. Somit ist es bei der erfindungsgemäßen Vorrichtung zur Sitzüberwachung möglich, daß eine Bildwiederholrate, mit der eine Szene aufgenommen wird, im Bereich von 100 bis 1000 Bildern/s liegt, so daß eine Steuerung eines Airbags im Millisekundenbereich gewährleistet werden kann. Der zeitliche Abstand zwischen beiden oben genannten Bildaufnahmen, einer bei aktiver Beleuchtung und einer ohne aktive Beleuchtung, muß weniger als 10 ms betragen, damit kontinuierliche Bewegungen im Raum zu keinen Fehlinterpretationen der Differenzbiider, die der Signalauswertung zugrunde liegen, führen. Die Bildung des Differenzbildes kann unmittelbar auf dem CMOS/CCD-Bildsensorchip oder alternativ ebenfalls in einem feldprogrammierbaren Gatterarray, einer anwendungsspezifischen integrierten Schaltung, einem Mikroprozessor oder einem Mikrocomputer erfolgen. Die Einrichtung zum Bilden der Differenz kann somit Teil der Ansteuerelektronik sein oder getrennt von derselben realisiert sein.

Bei bevorzugten Ausführungsbeispielen der erfindungsgemäßen Sitzüberwachungsvorrichtung ist ferner ein Interferenzfilter vorgesehen, das in Fig. 1 lediglich schematisch gezeigt und mit dem Bezugszeichen 18 bezeichnet ist. Die Durchlaßfrequenzen der optionalen Interferenzfilterscheibe 18 sind auf die Wellenlänge des von der monochromatischen Lichtquelle 2 emittierten Lichtstrahls abgestimmt. Durch diese Maßnahme kann Störlicht weiter unterdrückt werden. Obwohl in Fig. 1 die Interferenzfilterscheibe 18 sowohl vor dem Bildsensor 12 als auch vor der Lichtquelle 2 angeordnet ist, reicht es optional aus, wenn dieselbe lediglich vor dem Bildsensor 12 bzw. der Empfangsoptik 10 angeordnet ist. Ferner ist bei bevorzugten Ausführungsbeispielen der erfindungsgemäßen Sitzüberwachungsvorrichtung eine Signalverarbeitungselektronik vorgesehen, was in Fig. 1 schematisch durch einen Anschluß 20 angezeigt ist, die zur Auswertung des Differenzbildes und zur Anbindung des Signals, das Informationen über die Belegung des Sitzes an die Airbag-Steuerelektronik liefert, dient.

Die Signalverarbeitungselektronik verwendet die von dem Bildsensorarray erzeugten Differenzsignale zum einen zum Durchführen einer Objekterkennung und zum anderen zum Durchführen einer Abstandsmessung basierend auf dem Triangulationsprinzip, auf das nunmehr kurz bezugnehmend auf Fig. 1 eingegangen wird. Die Lichtquelle 2 projiziert einen Lichtstrahl 6 unter einem Winkel α in eine Szene, in der beispielsweise ein Objekt 8 angeordnet ist. Daraus resultiert ein Lichtfleck an der Position x auf dem Bildsensorarray, wenn das Objekt in dem Abstand, der durch die durchgezogene Linie 8 gezeigt ist, angeordnet ist. Befindet sich das Objekt näher an dem Bildsensor, erzeugt es einen Lichtfleck an der Position y auf dem Bildsensorarray, während es, wenn es weiter von dem Bildsensor entfernt ist, einen Lichtfleck an der Position z des Bildsensorarrays erzeugt. Da die Winkel und Beabstandungen der Lichtquelle sowie des Bildsensors bei einer solchen Vorrichtung bekannt sind, kann durch eine einfache Projektionsgeometrie aus der Position auf dem Bildsensorarray 12, auf dem der Lichtfleck erzeugt wird, auf den Abstand eines Objekts von dem Bildsensor geschlossen werden, wobei die Formel h = d · tan(α) Verwendung finden kann.

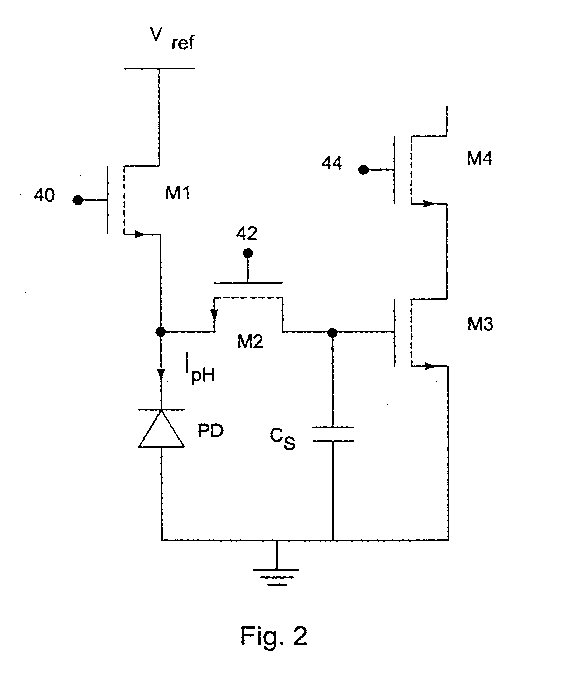

Bezugnehmend auf Fig. 2 wird nun ein Ausführungsbeispiel für ein Bildsensorelement des Bildsensorarrays, bei dem es sich vorzugsweise um einen CMOS/CCD-Bildsensor handelt, erläutert. Vorzugsweise wird als Bildsensor ein preisgünstiges Kamerasystem für die Hochgeschwindigkeitskinematographie mit einem Sensorchip auf der Basis von Standard-CMOS-Technologie verwendet. Ein solches System ist preisgünstiger als klassische opto-mechanische oder opto-elektrische Hochgeschwindigkeits-Aufzeichnungssysteme. Im Unterschied zu den festgelegten Strukturen von CCD-Bildelementen bietet die CMOS-Technologie eine flexible Gestaltung von Bildelementen. Neben der Kointegration von Signalauslese und Signalverarbeitung sind überdies verschiedenste Funktionen auf dem Chip realisierbar, die darüberhinaus eine Reduzierung der Verlustleistung sowie der Herstellungskosten des gesamten Systems erlauben.

Der CMOS-Sensor für die Hochgeschwindigkeitskinematographie wird vorzugsweise in einem Standard-CMOS-Prozeß mit einer n-Wannentiefe von 1 µm mit 128 x 128 Pixeln hergestellt und weist eine lineare Übertragungskennlinie für das einfallende Licht auf. Der CMOS-Sensor besitzt einen globalen elektronischen Verschluß, einen sogenannten Shutter, der eine gleichzeitige Bildaufnahmen in allen Pixeln ermöglicht. Dieser globale elektronische Verschluß ist notwendig, um eventuelle Verschmierungen bedingt durch sich schnell bewegende Objekte auszuschließen. Ferner kann durch diesen Verschluß eine vollständige Entkopplung von Belichtungszeit und Auslesetakt realisiert werden.

Ein Sensorelement eines solchen CMOS-Sensors, das ein Pixel darstellt, unter Verwendung eines Photoelements PD ist in Fig. 2 schematisch dargestellt. Bei bevorzugten Ausführungsbeispielen der vorliegenden Erfindung wird als Photoelement PD aufgrund ihrer schnellen Impulsantwort auf das einfallende Licht eine n⁺-Diffusion-p-Substrat-Photodiode verwendet. Die Kathode der Photodiode ist über einen Rücksetzschalter M1, der durch einen Transistor realisiert ist, mit einer Referenzspannung V_{ref} verbunden. Die Anode der Photodiode liegt auf Masse. Durch einen Lichteinfall auf die Photodiode PD wird ein Photostrom Iₚₕ erzeugt. Die Kathode der Photodiode Pd ist über einen Verschlußtransistor M2 ferner mit einem ersten Anschluß eines Speicherkondensators C_{S} verbunden, dessen zweiter Anschluß auf Masse liegt. Der Speicherkondensator C_{S} ist an seinem ersten Anschluß ferner mit Transistoren M3 und M4, die zum Auslesen der am Speicherkondensator C_{S} gespeicherten Ladung vorgesehen sind, verbunden.

Zu Beginn der Aufnahme eines jedes Bildes werden globale, d.h. für alle Sensorelemente gemeinsam verwendete, Steuersignale 40 (Reset-Signal) und 42 (Shutter-Signal), in jedem Pixel auf einen hohen Pegel gesetzt, um den Speicherkondensator C_{S} auf die Referenzspannung V_{ref} aufzuladen. Die Transistoren M1 und M2 funktionieren dabei als Schalter. Nachdem der Speicherkondensator C_{S} aufgeladen ist, wird das Reset-Signal 40 auf 0 gesetzt, woraufhin die Integration beginnt. Dabei wird abhängig von der örtlichen Verteilung des durch die externe Beleuchtung verursachten Photostroms in jedem Pixel der Speicherkondensator C_{S} entladen. Die Integration endet, wenn das Shutter-Signal 42 auf 0 gesetzt wird. Nun kann die Auslese der am Speicherkondensator C_{S} gespeicherte Ladung über die Transistoren M3 und M4 beginnen, wobei durch das Hochsetzen eines Zeilen-Auswahl-Signals 44 (Row-Select) die zeilenweise Auslese aktiviert wird.

Ein solcher CMOS-Sensor, sowie das gesamte mit demselben realisierte Kamerasystem, erfüllen alle Anforderungen von modernen Aufzeichnungssystemen für hohe Ausleseraten, d.h. mehr als 1000 Bilder pro Sekunde, keine Verschmierungen, keine Blooming-Effekte, sehr geringe Belichtungszeiten und eine lineare Übertragungskennlinie. Diese Merkmale sind insbesondere auch für die Aufnahme von sich schnell bewegenden Objekten von essentieller Bedeutung. Somit ist dieser Sensor hervorragend zur Sitzüberwachung in Kraftfahrzeugen geeignet, um eine rechtzeitige Steuerung des Aktivierungszustands von Airbags zu ermöglichen.

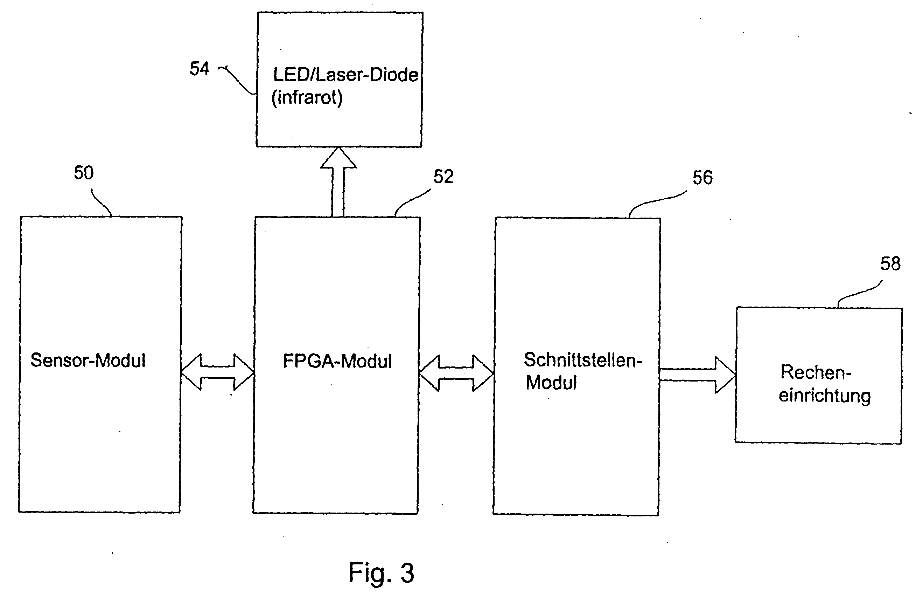

Ein Bildsensorarray, das aus einer Mehrzahl, beispielsweise 128 x 128 Pixel, von in Fig. 2 dargestellten Bildsensorelementen besteht, stellt den Hauptbestandteil einer CMOS-Hochgeschwindigkeitskamera dar, deren Ansteuer- bzw. Signalverarbeitungs-Elektronik beispielsweise durch ein FPGA-Modul realisiert sein kann, wie in Fig. 3 zu sehen ist. In Fig. 3 ist schematisch das Sensormodul 50 gezeigt, das mit dem FPGA-Modul 52 verbunden ist, wobei das FPGA-Modul 52 ferner mit einer LED/Laser-Diode 54, die vorzugsweise im nicht-sichtbaren Infrarot-Bereich arbeitet, verbunden ist, um einen synchronen Betrieb von Sensormodul 50 und Lichtquelle 54 zu ermöglichen. Das FPGA-Modul umfaßt, wie oben erläutert wurde, vorzugsweise die Ansteuerelektronik der Sitzüberwachungsvorrichtung. Das FPGA-Modul ist vorzugsweise über ein Schnittstellenmodul 56 mit einer Recheneinrichtung 58 , die vorzugsweise ein Mikroprozessor bzw. ein Mikrocomputer sein kann, verbunden.

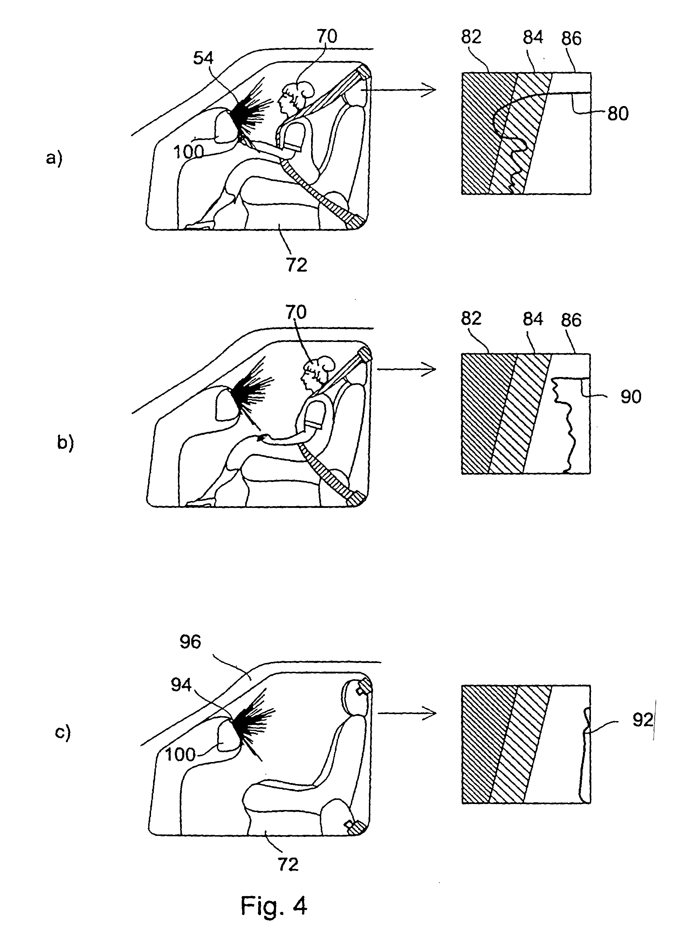

Eine bevorzugte Vorgehensweise, um aus den erfaßten Bildsignalen bzw. Differenzbildsignalen eine Sitzüberwachung mittels der Recheneinrichtung 58 durchzuführen, wird nachfolgend bezugnehmend auf die Fig. 4a) bis 4c) näher erläutert. Diese bevorzugte Vorgehensweise basiert auf dem Lichtschnittprinzip, dessen Anwendung es ermöglicht, die Kontur eines Objekts auf dem zu überwachenden Sitz zu bestimmen und damit eine Erkennung hinsichtlich des auf dem Sitz befindlichen Objekts durchzuführen. Eine solche Erkennung kann mittels Methoden der Mustererkennung erfolgen, so daß beispielsweise ein Kindersitz aus dem Schnittbild erkannt werden kann.

Ferner läßt sich aus dem erzeugten Schnittbild durch die Verwendung des Triangulationsprinzips, das oben erläutert wurde, der Abstand eines Objekts bzw. einer Person zur Airbag-Abdeckung ermitteln. Durch eine mehrzonalige Untersuchung läßt sich nun entscheiden, ob und wie der Airbag bei einer potentiellen Kollision zu aktivieren ist. Abhängig vom ermittelten Abstand der Person zur Airbag-Abdeckung ist zu entscheiden, ob der Airbag aktiviert oder deaktiviert wird, oder ob die Leistung des Airbags an den ermittelten Abstand angepaßt werden soll, bzw. ob eine mehrstufige Zuschaltung erfolgen soll.

Dies wird nachfolgend bezugnehmend auf die Fig. 4a) bis 4c) näher erläutert. In Fig. 4a) ist eine Person 70 auf dem Sitz 72 eines Kraftfahrzeuges dargestellt, wobei sich die Person 70 in einer vorgebeugten Stellung befindet. Diese vorgebeugte Stellung wird durch die erfindungsgemäße Sitzüberwachungsvorrichtung erfaßt, wobei in Fig. 4 jeweils der Lichtfächer der Lichtquelle 54 schematisch dargestellt ist. Durch die erfindungsgemäße Sitzüberwachungsvorrichtung wird ein Lichtschnitt erzeugt, der im rechten Teil von Fig. 4 mit dem Bezugszeichen 80 bezeichnet ist. Wie der Fig. zu entnehmen ist, ist der Erfassungsbereich in drei Abschnitte unterteilt, einen Airbag-Deaktivierungsabschnitt 82, einen Abschnitt 84 zur leistungsangepaßten Airbag-Auslösung, und einen Airbag-Aktivierungsabschnitt 86. Bei dem in Fig. 4a) dargestellten Zustand stellt die Sitzüberwachungsvorrichtung somit fest, daß sich der Insasse 70 teilweise in der Airbag-Deaktivierungszone 82 befindet, und somit in einem zu geringen Abstand von dem Airbag 100, so daß eine Deaktivierung des Airbags bewirkt wird.

In Fig. 4b) ist der Insasse 70 in einer normalen Sitzposition dargestellt, so daß sich das auf der rechten Seite in Fig. 4b) gezeigte Schnittbild 90 ergibt. Wie zu erkennen ist, befindet sich das Schnittbild vollständig im Airbag-Aktivierungsbereich 86, so daß der Airbag normal aktiviert wird, um bei einer potentiellen Kollision zu zünden. Dabei wird bei den in den Fig. 4a) und 4b) gezeigten Schnittbildern jeweils durch eine Mustererkennung erkannt, daß ein Insasse 70 auf dem Kraftfahrzeugsitz 72 positioniert ist.

In Fig. 4c) ist nunmehr kein Insasse auf dem Kraftfahrzeugsitz 72 angeordnet. Somit ergibt sich das im rechten Teil von Fig. 4c) gezeigte Schnittbild 92, das durch eine Mustererkennung dahingehend ausgewertet werden kann, daß sich kein Insasse auf dem Sitz befindet, so daß der Airbag 100 in jedem Fall deaktiviert werden kann.

Mögliche Positionen zur Anordnung der erfindungsgemäßen Sitzüberwachungsvorrichtung sind in Fig. 4c) bei 94 und 96 gezeigt. Dabei kann das Meßsystem der erfindungsgemäßen Sitzüberwachungsvorrichtung, wie bereits oben ausgeführt wurde, an einer geeigneten Stelle im Kraftfahrzeug, beispielsweise im Dachhimmel, an der Instrumententafel oder im Windlauf angebracht werden, wobei mit dem Bezugszeichen 94 in Fig. 4 die Instrumententafel angezeigt ist, während mit dem Bezugszeichen 96 in Fig. 4c) der Dachhimmel angezeigt ist.

Es ist für Fachleute klar, daß die Vorrichtung und das Verfahren gemäß der vorliegenden Erfindung verwendet werden können, um vorteilhaft eine Airbag-Aktivierungssteuerung in Kraftfahrzeugen durchzuführen. Dabei ist darauf hinzuweisen, daß das erfindungsgemäße System entsprechend angepaßt werden kann, um ein dreidimensionales Kamerasystem aufzubauen, das das gesamte Innere eines Kraftfahrzeuges überwachen kann, um sämtliche Gefahrenzonen im Bereich der zahlreichen Airbags in einem Kraftfahrzeug, beispielsweise der Seitenairbags usw., zu überwachen und den Aktivierungszustand der jeweiligen Airbags entsprechend zu steuern.

## Patentansprüche

1. Vorrichtung zur Sitzüberwachung in Kraftfahrzeugen mit folgenden Merkmalen:
einer gepulst betriebenen monochromatischen Lichtquelle (2; 54) zum kurzzeitigen Belichten eines zu überwachenden Raums;
einem Bildsensorarray (12; 50) zum Aufzeichnen eines Bilds des zu überwachenden Raums, mit einer globalen elektronischen Verschlußeinrichtung (M1, M2), die eine Einstellung der Belichtungszeit des Bildsensorarrays (12; 50) unabhängig von einem Auslesetakt des Bilasensorarrays (12; 50) ermöglicht;
einer Synchronisationseinrichtung zum Synchronisieren des Betriebs der gepulst betriebenen Lichtquelle (2; 54) und des Bildsensorarrays (12; 50); und
einer Steuereinrichtung (16; 52) zum Steuern der Lichtquelle (2; 54) und des Bildsensorarrays (12; 50), um während einer Belichtung des zu überwachenden Raums zu einer ersten Zeit ein erstes Bild desselben zu erzeugen, und um ohne eine Belichtung des zu überwachenden Raums zu einer zweiten Zeit ein zweites Bild desselben zu erzeugen; und
einer Einrichtung (58) zum Erzeugen eines Differenzbilds aus dem ersten und dem zweiten Bild.

2. Vorrichtung nach Anspruch 1, bei der die Belichtungszeit der Lichtquelle (2; 54) im Mikro- oder Nano-Sekunden-Bereich liegt, und bei der die erste und die zweite Zeit maximal 10 ms auseinanderliegen.

3. Vorrichtung nach Anspruch 1 oder 2, die ferner ein Interferenzlichtfilter (18) vor dem Bildsensorarray (12; 50) aufweist, dessen Durchlaßfrequenz auf die Wellenlänge des Belichtungslichts der Lichtquelle (2; 54) abgestimmt ist.

4. Vorrichtung nach einem der Ansprüche 1 bis 3, bei der die Lichtquelle (2; 54) eine im nicht-sichtbaren Nahinfrarotbereich emittierende Laserdiode oder lichtemittierende Diode ist, die mit einer Zylinderoptik oder einem Beugungsfilter (4) zur Formung eines Lichtfächers gebildet ist.

5. Vorrichtung nach einem der Ansprüche 1 bis 4, bei der ferner eine Einrichtung (58) zum Auswerten des Differenzsignals oder einer Mehrzahl von Differenzsignalen vorgesehen ist, um auf der Grundlage der Auswertung den Aktivierungszustand eines Airbags (100) zu steuern.

6. Vorrichtung nach Anspruch 5, bei der die Auswertungseinrichtung (58) das oder die Differenzsignale mittels eines Triangulationsverfahrens auswertet.

7. Verfahren zur Sitzüberwachung in Kraftfahrzeugen, mit folgenden Schritten:
a) Belichten eines zu überwachenden Raums mittels einer gepulst betriebenen monochromatischen Lichtquelle (2; 54) unter Verwendung einer Belichtungszeit im Mikro- oder Nano-Sekundenbereich;
b) Aufnehmen eines ersten Bilds des zu überwachenden Raums während der Belichtung im Schritt a) mittels eines Bildsensorarrays (12; 50);
c) Aufnehmen eines zweiten Bilds des zu überwachenden Raums ohne eine Belichtung desselben durch die Lichtquelle (2; 54) maximal 10 ms vor oder nach der Aufnahme des ersten Bilds; und
d) Erzeugen eines Differenzbilds aus dem ersten und dem zweiten Bild.

8. Verfahren nach Anspruch 7, das ferner den Schritt des Steuerns des Aktivierungszustands eines oder mehrerer Airbags (100) auf der Grundlage eines oder mehrerer Differenzbilder aufweist.

9. Verfahren nach Anspruch 8, bei dem auf der Grundlage eines oder mehrerer Differenzbilder ein Triangulationsverfahren durchgeführt wird, um auf der Grundlage der Ergebnisse des Triangulationsverfahrens den Aktivierungszustand eines oder mehrerer Airbags (100) zu steuern.

## Claims

1. A device for seat supervision in motor vehicles comprising:
a pulsed monochromatic light source (2; 54) for the short-time illumination of a supervised space;
an image sensor array (12; 50) for recording an image of the supervised space which has a global electronic shutter unit (M1, M2) which enables the illumination time of the image sensor array (12; 50) to be adjusted independently of a readout clock of the image sensor array (12; 50);
a synchronization unit for synchronizing the operation of the pulsed light source (2; 54) and the image sensor array (12; 50);
a control unit (16; 52) for controlling the light source (2; 54) and the image sensor array (12; 50) so as to create a first image of the supervised space during illumination of the same at a first time and to create a second image of the supervised space without illumination of the same at a second time; and
a unit (58) for creating a difference image from the first and the second image.

2. A device according to claim 1, wherein the illumination time of the light source (2; 54) lies in the microsecond or nanosecond range and wherein the first and the second times are at most 10 ms apart.

3. A device according to claim 1 or 2, which also has an interference light filter (18), the pass frequency of which is tuned to the wavelength of the illumination light of the light source (2; 54), in front of the image sensor array (12; 50).

4. A device according to one of the claims 1 to 3, wherein the light source (2; 54) is a laser diode or light emitting diode which emits light in the invisible near-infrared range and which is provided with a cylindrical optics unit or a diffraction grating (4) for forming a fan of light.

5. A device according to one of the claims 1 to 4, wherein a unit (58) for evaluating the difference signal or a plurality of difference signals is also provided so as to control the activation state of an airbag (100) on the basis of the evaluation.

6. A device according to claim 5, wherein the evaluation unit (58) evaluates the difference signal or difference signals using a triangulation method.

7. A method for seat supervision in motor vehicles, comprising the following steps:
a) illuminating a supervised space using a pulsed monochromatic light source (2; 54) employing an illumination time in the microsecond or nanosecond range;
b) recording a first image of the supervised space during the illumination in step a) using an image sensor array (12; 50);
c) recording a second image of the supervised space, without illuminating the same with the light source(2; 54), a maximum of 10 ms before or after recording the first image; and
d) creating a difference image from the first and the second image.

8. A method according to claim 7, which also includes the step of controlling the activation state of one or more airbags (100) on the basis of one or more difference images.

9. A method according to claim 8, wherein a triangulation method is performed on the basis of one or more difference images so as to control the activation state of one or more airbags (100) on the basis of the results of the triangulation method.

## Revendications

1. Dispositif de surveillance de siège dans des véhicules, ayant les caractéristiques suivantes
une source de lumière (2 ; 54) monochromatique, alimentée de manière pulsée, pour l'exposition momentanée à la lumière d'un espace à surveiller ;
un réseau de capteurs d'images (12 ; 50) pour enregistrer une image de l'espace à surveiller, avec un dispositif électronique global de fermeture (M1, M2) permettant le réglage du temps d'exposition à la lumière du réseau de capteurs d'images (12 ; 50) indépendamment d'un rythme de lecture du réseau de capteurs d'images (12 ; 50) ;
un dispositif de synchronisation pour la synchronisation du fonctionnement de la source de lumière (2 ; 54) alimentée de manière pulsée, et du réseau de capteurs d'images (12 ; 50) ; et
un dispositif de commande (16 ; 52) pour la commande de la source de lumière (2 ; 54) et du réseau de capteurs d'images (12 ; 50) afin de produire, pendant une exposition à la lumière de l'espace à surveiller, une première image de cet espace à surveiller dans un premier temps, et afin de produire une deuxième image de l'espace à surveiller dans un deuxième temps, sans exposition à la lumière de cet espace à surveiller ; et
un dispositif (58) pour produire une image différentielle à partir de la première image et de la deuxième image.

2. Dispositif selon la revendication 1, dans lequel le temps d'exposition à la lumière de la source de lumière (2 ; 54) se situe dans la plage des microsecondes ou des nanosecondes, et dans lequel le premier et le deuxième temps sont espacés au maximum de 10 ms.

3. Dispositif selon la revendication 1 ou 2, qui présente en outre un filtre de lumière interférentielle (18) devant le réseau de capteurs d'images (12 ; 50), dont la fréquence de filtration est accordée à la longueur d'onde de la lumière d'exposition de la source de lumière (2 ; 54).

4. Dispositif selon l'une quelconque des revendications 1 à 3, dans lequel la source de lumière (2 ; 54) est une diode à laser émettant dans la plage non visible des infrarouges proches ou une diode émettant de la lumière, qui est formée avec une optique cylindrique ou un filtre de diffraction (4) pour former un éventail de lumière.

5. Dispositif selon l'une quelconque des revendications 1 à 4, dans lequel un dispositif (58) d'évaluation du signal différentiel ou d'une quantité multiple de signaux différentiels est en outre prévu pour commander l'état d'activation d'un coussin d'air (100) sur la base de l'évaluation.

6. Dispositif selon la revendication 5, dans lequel le dispositif d'évaluation (58) évalue le ou les signaux différentiels au moyen d'un procédé de triangulation.

7. Procédé de surveillance de siège dans des véhicules, ayant les étapes suivantes :
a) exposition à la lumière d'un espace à surveiller au moyen d'une source de lumière (2 ; 54) monochromatique, alimentée de manière pulsée, avec utilisation d'un temps d'exposition dans la plage des microsecondes ou des nanosecondes ;
b) enregistrement d'une première image de l'espace à surveiller pendant l'exposition à la lumière de l'étape a) au moyen d'un réseau de capteurs d'images (12 ; 50) ;
c) enregistrement d'une deuxième image de l'espace à surveiller sans exposition à la lumière de cet espace par la source de lumière (2 ; 54) au maximum 10 ms avant ou après l'enregistrement de la première image ; et
d) création d'une image différentielle à partir de la première image et de la deuxième image.

8. Procédé selon la revendication 7, qui présente en outre l'étape de commande de l'état d'activation d'un ou de plusieurs coussins d'air (100) sur la base d'une ou de plusieurs images différentielles.

9. Procédé selon la revendication 8, dans lequel un procédé de triangulation est exécuté sur la base d'une ou de plusieurs images différentielles pour commander l'état d'activation d'un ou de plusieurs coussins d'air (100) sur la base des résultats du procédé de triangulation.
